# EUROPÄISCHE PATENTSCHRIFT

(11) **EP 0 787 214 B1**
(45) Veröffentlichungstag und Bekanntmachung des Hinweises auf die Patenterteilung: **05.08.1998**
(21) Anmeldenummer: 95933227.1
(22) Anmeldetag: 12.10.1995
(51) Int. Cl.: C21B 13/14

(54) **ANLAGE UND VERFAHREN ZUR HERSTELLUNG VON ROHEISEN UND/ODER EISENSCHWAMM**
PLANT AND PROCESS FOR PRODUCING RAW IRON AND/OR SPONGE IRON
PROCEDE ET INSTALLATION PERMETTANT DE PRODUIRE DE LA FONTE BRUTE ET/OU DU FER SPONGIEUX

(30) Priorität: 17.10.1994 AT 1958/94
(43) Veröffentlichungstag der Anmeldung: 06.08.1997
(60) Teilanmeldung: 98101000.2
(73) Patentinhaber: VOEST-ALPINE INDUSTRIEANLAGENBAU GMBH, 4020 Linz (AT)
(72) Erfinder: KEPPLINGER, Leopold Werner, 4060 Leonding (AT); MILIONIS, Konstantin, 8413 St. Georgen a/d Stiefling 122 (AT); SIUKA, Dieter, 4501 Neuhofen (AT); WIESINGER, Horst, 4020 Linz (AT)
(74) Vertreter: Kopecky, Helmut, Dipl.-Ing. Kopecky & Schwarz Patentanwälte
(86) Internationale Anmeldenummer: AT9500199
(87) Internationale Veröffentlichungsnummer: WO9612045

(56) Entgegenhaltungen:
- EP-A- 0 487 856
- AT-B- 396 255

## Beschreibung

Die Erfindung betrifft eine Anlage zur Herstellung von Roheisen und/oder Eisenschwamm, mit einem Direktreduktions-Schachtofen für stückiges Eisenerz, einem Einschmelzvergaser, einer den Einschmelzvergaser mit dem Schachtofen verbindenden Zuleitung für ein Reduktionsgas, einer den Schachtofen mit dem Einschmelzvergaser verbindenden Förderleitung für das im Schachtofen gebildete Reduktionsprodukt, mit einer vom Schachtofen ausgehenden Topgas-Ableitung, mit in den Einschmelzvergaser mündenden Zuleitungen für sauerstoffhältige Gase und Kohlenstoffträger und einem am Einschmelzgefäß vorgesehenen Abstich für Roheisen und Schlacke. Weiters betrifft die Erfindung ein Verfahren zur Herstellung von Roheisen und/oder Eisenschwamm unter Verwendung dieser Anlage.

Ein Anlage dieser Art ist beispielsweise aus der AT-B - 376.241 sowie der DE-C - 40 37 977 bekannt. Hierbei wird stückiges Eisenerz im Schachtofen in einer Festbett-Direktreduktionszone zu Eisenschwamm reduziert. Der Eisenschwamm wird nachfolgend im Einschmelzvergaser in einer Einschmelzvergasungszone unter Zufuhr von Kohlenstoffträgern und sauerstoffhältigem Gas erschmolzen. Im Einschmelzvergaser wird ein CO- und H₂-hältiges Reduktionsgas erzeugt, welches über die den Einschmelzvergaser mit dem Schachtofen verbindende Zuleitung der Direktreduktionszone des Schachtofens zugeführt, dort umgesetzt und als Topgas abgezogen wird. Diese Anlage bzw. dieses Verfahren hat sich zur Verarbeitung von stückigem Eisenerz, worunter Erz mit einer Korngröße von über 3, vorzugsweise über 6 mm verstanden wird, in der Praxis bewährt.

Der Erfindung liegt die Aufgabe zugrunde, eine Anlage sowie ein Verfahren zu schaffen, mit welchen sich nicht nur Stückerz, sondern auch Feinerz verarbeiten läßt, insbesondere Feinerz mit einer Korngröße zwischen 0 und 8 mm, vorzugsweise zwischen 0 und 4 mm. Hierbei soll insbesondere eine große Variationsmöglichkeit hinsichtlich der eingesetzten Stückerz- und Feinerzmenge im Verhältnis zur insgesamt eingesetzten Erzmenge möglich sein, wobei die Anlage in einem weiten Bereich des Verhältnisses Stückerz- zu Feinerzmenge energieoptimiert und auch produktoptimiert betrieben werden kann. D.h. daß das erzeugte Produkt, Roheisen und/oder Eisenschwamm, unter minimaler Energieeinbringung einem hohen Qualitätsstandard entspricht, insbesondere einen hohen Metallisierungsgrad und Reinheitsgrad aufweist, so daß eine problemlose Weiterverarbeitung sichergestellt ist.

Diese Aufgabe wird bei einer Anlage der eingangs beschriebenen Art durch mindestens einen Wirbelbettreaktor zur Aufnahme von Feinerz, eine Reduktionsgas-Zuleitung zu diesem Wirbelbettreaktor, eine Abgas-Ableitung aus dem Wirbelbettreaktor und eine Austragsvorrichtung, vorzugsweise eine Brikettiereinrichtung, für das im Wirbelbettreaktor gebildete Reduktionsprodukt gelöst, wobei die Topgas-Ableitung des Schachtofens und die Abgas-Ableitung des Wirbelbettreaktors in eine Reinigungseinrichtung, wie einen Wäscher, und nachfolgend in eine Heizeinrichtung münden, von der die Reduktionsgas-Zuleitung des Wirbelbettreaktors ausgeht.

Die Verarbeitung von Feinerz zu Eisenschwamm in einem Wirbelbettreaktor ist dem Prinzip nach aus der US-A - 5,082,251 bekannt. Hierbei wird das Reduktionsgas durch katalytische Reformierung von entschwefeltem und vorgewärmtem Erdgas mit überhitztem Wasserdampf in einem Reformerofen erzeugt, Dieses Verfahren ermöglicht die Herstellung von Eisenschwamm hoher Qualität, jedoch ausschließlich aus Feinerz.

Durch die erfindungsgemäße Verknüpfung einer eingangs beschriebenen Schachtofen-Anlage mit einem Wirbelbettreaktor, bei der ein Teil des dem Wirbelbettreaktor zugeführten Reduktionsgases durch das im Einschmelzvergaser erzeugte und im Schachtofen zu Topgas umgesetzte Reduktionsgas gebildet wird, gelingt es, die Anlage unter optimaler Energieausnützung der zugeführten Energieträger einzusetzen, wobei der mengenmäßige Anteil von Feinerz bzw. Stückerz an der Gesamterzeinsatzmenge in weiten Bereichen variieren kann und sogar ein Betrieb, bei dem ausschließlich Feinerz eingesetzt wird, denkbar ist. Somit kann erfindungsgemäß der Menge der jeweils zur Verfügung stehenden Erzart, nämlich Feinerz bzw. Stückerz, optimal Rechnung getragen werden. Störungen bei der Verarbeitung von Stückerz verursacht durch einen hohen Feinanteil, wie sie beim Stand der Technik auftreten können. sind in einfacher Weise vermeidbar, da das Feinerz lediglich abgeschieden und dem Wirbelbett im Wirbelbettreaktor zugeführt werden muß. Hierdurch werden auch Probleme bei der Lagerung des Erzes wesentlich vereinfacht. Zudem ist es nicht mehr wie beim Stand der Technik notwendig, Stückerz und Feinerz in unterschiedlichen Anlagen, die einen entsprechend hohen Investitionsaufwand erfordern, zu verarbeiten (Umgehung von Pelletieranlagen).

Vorzugsweise ist die Zuleitung für im Einschmelzvergaser gebildetes Reduktionsgas über einen Bypass zur Überbrückung des Schachtofens direkt mit der Topgas-Ableitung des Schachtofens verbunden. Hierdurch kann für die Reduktion im Schachtofen nicht benötigtes Reduktionsgas als Überschußgas zur Steuerung der Zusammensetzung des in den Wirbelbettreaktor eingeleiteten Reduktionsgases und zur Kapazitätserhöhung der Feinerzverarbeitung herangezogen werden.

Vorteilhaft ist in der Reduktionsgas-Zuleitung des Wirbelbettreaktors eine CO₂-Entfernungsanlage zur Verringerung des CO₂-Gehaltes des im Wirbelbettreaktor gebildeten Abgases vorgesehen. Hierbei mündet weiters vorteilhaft die Topgas-Ableitung des Schachtofens unter Umgehung der CO₂-Entfernungsanlage in die Reduktionsgas-Zuleitung des Wirbelbettreaktors.

Um die für die Direktreduktion im Wirbelbett-Verfahren notwendige Temperatur des Reduktionsgases sicherzustellen, ist in der Reduktionsgas-Zuleitung des Wirbelbettreaktors eine Nachverbrennungseinrichtung, in der ein Teil des Reduktionsgases unter Sauerstoffzuleitung verbrannt wird, vorgesehen. Hierdurch gelingt es, ohne nennenswerte Gasverluste die Temperatur des Reduktionsgases entsprechend den gewünschten Anforderungen einzustellen.

Ist eine Kapazitätserhöhung bei der Herstellung von Roheisen im Einschmelzvergaser erforderlich, wird zweckmäßig überschüssiges, dem Wirbelbettreaktor zur Verfügung stehendes Reduktionsgas dem Schachtofen für stückiges Eisenerz zugeführt, zu welchem Zweck die Reduktionsgas-Zuleitung des Wirbelbettreaktors über eine Zweigleitung mit der Zuleitung für Reduktionsgas des Schachtofens verbunden ist.

Ist eine Erschmelzung des im Wirbelbettreaktor erzeugten Eisenschwamms gewünscht z.B. zur Ausnützung überschüssiger Energie des Einschmelzvergasers, wird zweckmäßig Eisenschwamm zumindest in Teilmengen in den Einschmelzvergaser eingebracht wofür in den Einschmelzvergaser eine Fördereinrichtung zum Einbringen von im Wirbelbettreaktor reduziertem, vorzugsweise anschließend brikettiertem Reduktionsprodukt mündet.

Das erfindungsgemäße Verfahren zur Herstellung von Roheisen und/oder Eisenschwamm ist dadurch gekennzeichnet, daß Stückerz in einer Festbett-Direktreduktionszone zu Eisenschwamm reduziert wird, der Eisenschwamm in einer Einschmelzvergasungszone unter Zufuhr von Kohlenstoffträgern und sauerstoffhältigem Gas erschmolzen und ein CO- und H₂-hältiges Reduktionsgas erzeugt wird, das in die Festbett-Direktreduktionszone eingeleitet, dort umgesetzt und als Topgas abgezogen wird, und daß Feinerz in einer Wirbelbett-Direktreduktionszone im Wirbelbett-Verfahren zu Eisenschwamm reduziert wird, wobei der Wirbelbett-Direktreduktionszone Topgas aus der Festbett-Direktreduktionszone und/oder in der Einschmelzvergasungszone erzeugtes Reduktionsgas, die einer CO₂-Entfernung und einer Aufheizung unterzogen werden, sowie in der Wirbelbett-Direktreduktionszone entstehendes Abgas zugeführt und als Abgas abgezogen werden.

Hierbei wird zweckmäßig das Abgas aus der Wirbelbett-Direktreduktionszone mit Topgas aus der Festbett-Direktreduktionszone und/oder mit in der Einschmelzvergasungszone erzeugtem Reduktionsgas vermischt und der Wirbelbett-Direktreduktionszone zugeführt.

Um den CO₂-Gehalt des der Wirbelbett-Direktreduktionszone zugeführten Reduktionsgases auf das gewünschte Ausmaß zu reduzieren, wird zweckmäßig das Abgas aus der Wirbelbett-Direktreduktionszone einer CO₂-Entfernung unterworfen.

Zur Einstellung der optimalen Temperatur des in der Wirbelbett-Direktreduktionszone eingesetzten Reduktionsgases wird dieses in einem Wärmetauscher aufgeheizt Zu diesem Zweck kann auch eine vorzugsweise zusätzlich vorgesehene Nachverbrennung des Reduktionsgases durchgeführt werden.

Vorteilhaft wird das in der Einschmelzvergasungszone gebildete Reduktionsgas unter Umgehung der CO₂-Entfernung der Wirbelbett-Direktreduktionszone zugeführt.

Die Direktreduktion im Wirbelbett-Verfahren kann zwei- oder mehrstufig durchgeführt werden, wie dies beispielsweise aus der US-A - 5,082,251 bekannt ist. Weiters ist es möglich. die Direktreduktion mit Hilfe eines zirkulierenden Wirbelbettes durchzuführen, das beispielsweise aus der EP-B - 0 364 865 bekannt ist.

Zur Berücksichtigung unterschiedlicher Einsatzmengen von Stückerz und/oder Feinerz wird vorteilhaft ein Teil des der Wirbelbett-Direktreduktionszone zugeführten Reduktionsgases abgezweigt und der Festbett-Direktreduktionszone zugeführt.

Vorzugsweise wird zwecks optimaler Energieausnutzung zumindest ein Teil des in der Wirbelbett-Direktreduktionszone gebildeten Eisenschwammes in der Einschmelzvergasungszone aufgeschmolzen.

Die erfindungsgemäße Anlage bzw. das erfindungsgemäße Verfahren erlauben es, daß die Menge an eingesetztem Stückerz in einem Bereich zwischen 0 und 100 % des Gesamt-Erzeinsatzes, vorzugsweise zwischen 30 und 60 %, variiert werden kann und der auf 100 % ergänzte Erzeinsatz von Feinerz gebildet ist.

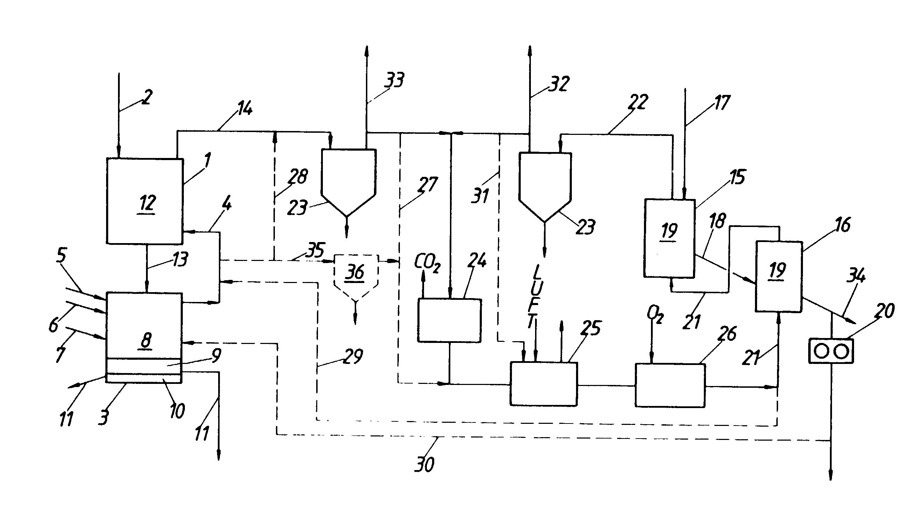

Die Erfindung ist nachfolgend anhand eines in der Zeichnung schematisch dargestellten Ausführungsbeispieles näher erläutert, wobei die in der Zeichnung dargestellte Figur das Verfahrensschema einer erfindungsgemäßen Anlage veranschaulicht.

In einen Schachtofen 1 wird von oben über eine Fördereinrichtung 2 stückiges Eisenerz über ein nicht dargestelltes Schleusensystem, gegebenenfalls zusammen mit Zuschlagstoffen, chargiert. Der Schachtofen 1 steht mit einem Einschmelzvergaser 3 in Verbindung, in dem aus Kohle und sauerstoffhältigem Gas ein Reduktionsgas erzeugt wird, welches über eine Zuleitung 4 dem Schachtofen 1 zugeführt wird, wobei in der Zuleitung 4 gegebenenfalls eine Gasreinigungs- und eine Gaskühlungseinrichtung vorgesehen sind.

Der Einschmelzvergaser 3 weist eine Zuführung 5 für feste Kohlenstoffträger, eine Zuführung 6 für sauerstoffhältige Gase sowie gegebenenfalls Zuführungen 7 für bei Raumtemperatur flüssige oder gasförmige Kohlenstoffträger, wie Kohlenwasserstoffe, sowie für gebrannte Zuschläge auf. In dem Einschmelzvergaser 3 sammelt sich unterhalb der Einschmelzvergasungszone 8 schmelzflüssiges Roheisen 9 und schmelzflüssige Schlacke 10. die über einen Abstich 11 abgestochen werden.

Das im Schachtofen 1 in einer Festbett-Direktreduktionszone 12 zu Eisenschwamm reduzierte stückige Erz wird zusammen mit den in der Direktreduktionszone 12 gebrannten Zuschlägen über eine den Schachtofen 1 mit dem Einschmelzvergaser 3 verbindende Förderleitung 13 zugeführt, beispielsweise mittels nicht näher dargestellter Austragsschnecken etc.. An dem oberen Teil des Schachtofens schließt eine Topgas-Ableitung 14 für das in der Direktreduktionszone 12 aus Reduktionsgas gebildete Topgas an.

Die Anlage weist ferner zwei in Serie hintereinander geschaltete Wirbelbettreaktoren 15, 16 auf, wobei Feinerz über eine Feinerz-Zuleitung 17 dem ersten Wirbelbettreaktor 15 und von diesem über eine Förderleitung 1X zum nachgeordneten Wirbelbettreaktor 16 geleitet wird. Das in den Wirbelbettreaktoren 15, 16 in jeweils einer Wirbelbett-Direktreduktionszone 19 fertigreduzierte Material (Eisenschwamm) wird nach Austritt aus dem zweiten Wirbelbettreaktor 16 einer Brikettieranlage 20 zugeführt, wo es heiß- oder kaltbrikettiert wird. Vor Einleitung des Feinerzes in den ersten Wirbelbettreaktor 15 wird es einer Erzvorbereitung, wie einer Trocknung, unterzogen, was jedoch nicht näher dargestellt ist.

Reduktionsgas wird im Gegenstrom zum Erzdurchfluß vom Wirbelbettreaktor 16 zum Wirbelbettreaktor 17, d.h. zu den Wirbelbettreaktoren vorgesehenen Wirbelbett-Direktreduktionszonen 19, über die Gasleitung 21 geführt und als Abgas über eine Abgas-Ableitung 22 aus dem in Erzflußrichtung ersten Wirbelbettreaktor 15 abgeleitet.

Sowohl das aus dem Schachtofen 1 abgezogene Topgas als auch das aus dem Wirbelbettreaktor 15 abgezogene Abgas werden jeweils in einer vorzugsweise als Naßwäscher ausgebildeten Reinigungseinrichtung 23 gekühlt und gewaschen und nachfolgend durch Zusammenmünden der Topgas-Ableitung 14 und der Abgas-Ableitung 22 miteinander vermischt. Dieses so gebildete Mischgas wird durch eine vorzugsweise als CO₂-Wäscher ausgebildete CO₂-Entfernungsanlage 24 hindurchgeschickt und von CO₂ befreit. Anschließend erfolgt eine Aufheizung des Mischgases in einem Wärmetauscher 25 auf ca. 400°C. Diesem nachgeordnet ist eine Nachverbrennungseinrichtung 26, in der ein Teil des Mischgases unter Sauerstoffzuführung verbrannt wird, wodurch das Mischgas die für die Direktreduktion in den Wirbelbettreaktoren 15, 16 erforderliche Temperatur bis zu ca. 850°C erreicht. Dieses aufgeheizte Mischgas steht nunmehr den Wirbelbettreaktoren 15, 16 als Reduktionsgas zur Verfügung.

Das Stückerz und das Feinerz werden entweder von getrennten Lagerstätten der Anlage zugeführt oder, falls Mischerz zur Verarbeitung gelangen soll, wird dieses einer Erzsiebung unterzogen, worauf die Grobkornfraktion dem Schachtofen 1 und die Feinkornfraktion dem Wirbelbettreaktor 15 zugeführt werden.

Gemäß einer bevorzugten Ausführungsform wird lediglich das Abgas der Wirbelbettreaktoren 15, 16 einer CO₂-Wäsche unterzogen und das aus dem Schachtofen 1 abgezogene Topgas über eine zum CO₂-Wäscher 24 vorgesehene Bypass-Leitung 27 erst nach der CO₂-Wäsche des Abgases mit diesem vermischt. Wenn nur geringe Stückerzmengen - im Verhältnis zu den eingesetzten Feinerzmengen - eingesetzt werden oder eventuell überhaupt kein Stückerz reduziert wird, kann das im Einschmelzvergaser 3, der dann lediglich als Kohlevergasungsreaktor arbeitet, gebildete Reduktionsgas über eine den Schachtofen 1 überbrückende Bypass-Leitung 28 direkt von der in den Schachtofen 1 mündenden Zuleitung 4 abgezweigt werden. Diese Bypass-Leitung 28 tritt auch dann in Aktion, wenn im Einschmelzvergaser 3 Überschußgas, also mehr Reduktionsgas, anfällt, als im Schachtofen 1 benötigt wird. Mit Hilfe dieses Überschußgases kann die Gaszusammensetzung des in die Wirbelbettreaktoren 15, 16 eingebrachten Reduktionsgases gesteuert werden. Hierdurch kann eine Steigerung der in den Wirbelbettreaktoren 15, 16 reduzierten Feinerzmenge erzielt werden.

Für den Fall, daß eine Kapazitätserhöhung der Reduktion des Stückerzes im Schachtofen 1 erforderlich ist, kann Überschußgas des den Wirbelbettreaktoren 15, 16 zugeführten Reduktionsgases über eine Zweigleitung 29 in den Schachtofen 1 eingeleitet werden.

Sowohl das Roheisen als auch der brikettierte Eisenschwamm werden in einem Kompakthüttenwerk, beispielsweise ausgestattet mit Elektroöfen und Konvertern, verarbeitet. Falls erforderlich, kann brikettierter Eisenschwamm auch in den Einschmelzvergaser 3 über die Fördereinrichtung 30 eingebracht und dort eingeschmolzen werden. Dies ist insbesondere dann von Vorteil, wenn im Einschmelzvergaser 3 überschüssige Energie zur Verfügung steht.

Der Wärmetauscher wird vorteilhaft mit einem Teil des Abgases der Wirbelbettreduktion, das über eine Leitung 31 zugeführt wird, betrieben. Für den Reduktionsprozeß bzw. den Wärmetauscher 25 nicht benötigtes Abgas wird über eine Exportgas-Ableitung 32 anderen Verbrauchern zugeführt. Dies gilt auch für überschüssiges Topgas, das über die Ableitung 33 Verbrauchern zugeführt werden kann. Die Ableitungen 32 und 33 münden vorteilhaft in einen Gas-Sammelbehälter, wie einen Gasometer, zur Zwischenspeicherung des Exportgases und des Topgases. Damit können in vorteilhafter Weise unterschiedliche Gasproduktionen und Druckschwankungen im System abgefangen und ausgeglichen werden.

Anstelle der Brikettieranlage 20 kann auch eine Austragvorrichtung 34, wie z.B. ein Kaltaustragsystem, vorgesehen sein.

Über eine von der Zuleitung 4 ausgehende Bypass-Leitung 35 können der Naßwäscher 23 und der CO₂-Wäscher 24 überbrückt werden. Dies ist vorteilhaft, da das den Einschmelzvergaser 3 verlassende Gas einen geringen CO₂-Gehalt aufweist und es daher nicht notwendig ist, das Gas über diese Einrichtungen zu führen, solange der erhöhte Schwefelgehalt im Gas nicht stört. Weiters bietet das System die Möglichkeit, den CO₂-Gehalt gezielter einzustellen. In die Bypass-Leitung 35 ist ein Staubabscheider 36 integriert.

Sämtliche Fördereinrichtungen bzw. Gasleitungen sind mit Regelorganen bzw. Verdichtern (Kompressoren) in üblicher Weise ausgestattet.

### Beispiel:

In einer der Zeichnung entsprechenden Anlage mit einer Produktionskapazität von 100 t/h brikettiertem Eisenschwamm aus Feinerz und etwa 100 t/h Roheisen aus Stückerz wurden 148 t/h Feinerz in die Wirbelbettreaktoren 15, 16 sowie 149 t/h Stückerz in den Schachtofen 1 eingesetzt.

Als Zuschlagstoffe werden Kalkstein, Dolomit und Quartz in einer Menge von 27 t/h in den Wirbelbettreaktor 15 und/oder in den Schachtofen 1 chargiert.

In den Einschmelzvergaser 3 werden Kohle in einer Menge von 800 kg/t Roheisen sowie 540 Nm³/t Roheisen Sauerstoff eingebracht.

Aus dem Schachtofen 1 werden 109 t/h Eisenschwamm ausgetragen und in den Einschmelzvergaser 3 chargiert und dort eingeschmolzen. Roheisen fällt in einer Menge von 100 t/h an und weist folgende chemische Zusammensetzung auf:

**Tabelle 1**

| | |
|---|---|
| Fe | 94,9 % |
| C | 4,3 % |
| Si | 0,4 % |
| S | 0,04 % |
| P | 0,08 % |

Im Einschmelzvergaser 3 kommt es zur Bildung von 30 t/h Schlacke.

Das im Einschmelzvergaser 3 durch Kohlevergasung entstehende Reduktionsgas wird nach einer Reinigung und Kühlung mit etwa 850°C in die Direktreduktionszone 12 des Schachtofens 1 eingeleitet. Es fällt in einer Menge von 190.000 Nm³/h mit folgender chemischer Zusammensetzung an:

**Tabelle II**

| | |
|---|---|
| CO [%] | 69,60 |
| CO₂ [%] | 2,83 |
| H₂ [%] | 22,57 |
| H₂O [%] | 1,54 |
| H₂S ppm | 500,00 |
| CH₄ [%] | 0,51 |
| N₂,Ar [%] | 2,90 |

Sein Heizwert beträgt 11.300 kJ/Nm³.

Das aus dem Schachtofen 1 austretende Topgas fällt in einer Menge von 160.000 Nm³/h an. Seine chemische Zusammensetzung ist in nachstehender Tabelle III wiedergegeben.

**Tabelle III**

| | |
|---|---|
| CO [%] | 42,30 |
| CO₂ [%] | 35,87 |
| H₂ [%] | 15,80 |
| H₂O [% ] | 2,26 |
| H₂S ppm | 125,00 |
| CH₄[% ] | 1,06 |
| N₂,Ar [%] | 2,70 |

Sein Heizwert beträgt 7.435 kJ/Nm³.

Bei dem in den Wirbelbettreaktor 15 chargierten Feinerz handelt es sich um Erz mit einer maximalen Korngröße von 8 mm. Es wird zu Eisenschwamm reduziert, u.zw. in zwei Stufen, und anschließend heißbrikettiert wird. Der heißbrikettierte Eisenschwamm weist einen Metallisierungsgrad (Feₘₑₜ/Fe_{ges}) von 92 % auf.

Das in die Wirbelbettreaktoren 15, 16 eingeführte Reduktionsgas wird durch Mischen des aus dem Schachtofen 1 abgezogenen Topgases mit einem Teil des aus dem in Fließrichtung des Feinerzes erstgelegenen Wirbelbettreaktor 15 abzogenen Abgases gebildet. Dieses Abgas fällt in einer Menge von 189.766 Nm³/h an und weist die nachstehende chemische Zusammensetzung auf.

**Tabelle IV**

| | |
|---|---|
| CO [%] | 41,41 |
| CO₂ [%] | 25,28 |
| H₂ [%] | 17,10 |
| H₂O [%] | 1,50 |
| H₂S ppm | 22,31 |
| CH₄ [%] | 3,50 |
| N₂,Ar [%] | 11,21 |

Sein Heizwert beträgt 8.337 kJ/Nm³. Von diesem Abgas werden 20.905 Nm³ als Exportgas über die Exportgas-Ableitung 32 für andere Verwendungszwecke abgezweigt, 151.000 Nm³/h des Abgases werden mit dem aus dem Schachtofen 1 abgezogenen Topgas vermischt, u.zw. nachdem sowohl das Topgas als auch das Abgas einer Naßwäsche unterzogen wurden.

Das so gebildete Mischgas (311,000) Nm³/h) weist einen Heizwert von 7.873 kJ/Nm³ auf. Seine chemische Zusammensetzung ist wie folgt:

**Tabelle V**

| | |
|---|---|
| CO [%] | 41,87 |
| CO₂ [%] | 30,73 |
| H₂ [%] | 16,43 |
| H₂O [%] | 1,89 |
| H₂S ppm | 75,14 |
| CH₄ [%] | 2,24 |
| N₂,Ar [%] | 6,83 |

Nach dem CO₂-Waschen dieses Mischgases im CO₂-Wäscher 24 ist seine chemische Zusammensetzung wie folgt:

**Tabelle VI**

| | |
|---|---|
| CO [%] | 61,34 |
| CO₂ [%] | 0,45 |
| H₂ [%] | 24,07 |
| H₂O [%] | 0,70 |
| H₂S ppm | 1,11 |
| CH₄ [%] | 3,32 |
| N₂,Ar [%] | 10,11 |

Seine Menge beträgt 210.140 Nm³/h und sein Heizwert liegt bei 11.547 kJ/Nm³. Das aus dem CO₂-Wäscher 24 abgeleitete, in der Hauptsache CO₂ enthaltende Gas fällt in einer Menge von 100.860 Nm³/h an. Seine chemische Zusammensetzung ist in nachstehender Tabelle VII wiedergegeben.

**Tabelle VII**

| | |
|---|---|
| CO [%] | 1,29 |
| CO₂ [%] | 93,81 |
| H₂ [%] | 0,51 |
| H₂O [%] | 4,37 |
| H₂S ppm | 229,38 |
| CH₄ [%] | 0,00 |
| N₂,Ar [%] | 0,00 |

Anschließend erfolgt eine Erwärmung des Mischgases in dem Wärmetauscher 25, indem aus dem Wirbelbettreaktor 15 über die Gasleitung 31 abgeleitetes Abgas in einer Menge von 17.861 Nm³/h verbrannt wird. Zu dieser Verbrennung ist eine Luftzuführung in einer Menge von 32.184 Nm³/h nötig.

In das so im Wärmetauscher 25 erwärmte Mischgas wird Sauerstoff in einer Menge von 5.083 Nm³/h zugeführt, so daß eine Teilverbrennung des Mischgases stattfindet. Dieses nunmehr auf eine Temperatur von 820°C erhitzte Mischgas steht nunmehr als Reduktionsgas für die Direktreduktion des Feinerzes in den Wirbelbettreaktoren 15 und 16 zur Verfügung, u.zw. in einer Menge von 210.846 Nm³/h und mit einem Heizwert von 10.947 kJ/Nm³. Seine chemische Zusammensetzung ist in nachstehender Tabelle VIII angegeben.

**Tabelle VIII**

| | |
|---|---|
| CO [%] | 58,16 |
| CO₂ [%] | 3,60 |
| H₂ [%] | 22,82 |
| H₂O [%] | 2,19 |
| H₂S ppm | 1,11 |
| CH₄ [%] | 3,15 |
| N₂,Ar [%] | 10,09 |

## Patentansprüche

1. Anlage zur Herstellung von Roheisen und/oder Eisenschwamm, mit einem Direktreduktions-Schachtofen (1) für stückiges Eisenerz, einem Einschmelzvergaser (3), einer den Einschmelzvergaser (3) mit dem Schachtofen (1) verbindenden Zuleitung (4) für ein Reduktionsgas, einer den Schachtofen (1) mit dem Einschmelzvergaser (3) verbindenden Förderleitung (13) für das im Schachtofen (1) gebildete Reduktionsprodukt, mit einer vom Schachtofen (1) ausgehenden Topgas-Ableitung (14), mit in den Einschmelzvergaser (3) mündenden Zuleitungen (5, 6, 7) für sauerstoffhältige Gase und Kohlenstoffträger und einem am Einschmelzgefäß (3) vorgesehenen Abstich (11) für Roheisen und Schlacke,
gekennzeichnet durch mindestens einen Wirbelbettreaktor (15, 16) zur Aufnahme von Feinerz, eine Reduktionsgas-Zuleitung (21) zu diesem Wirbelbettreaktor (15, 16), eine Abgas-Ableitung (22) aus dem Wirbelbettreaktor (15) und eine Austragsvorrichtung (34), vorzugsweise eine Brikettiereinrichtung (20), für das im Wirbelbettreaktor (15, 16) gebildete Reduktionsprodukt, wobei die Topgas-Ableitung (14) des Schachtofens (1) und die Abgas-Ableitung (22) des Wirbelbettreaktors (15) in eine Reinigungseinrichtung, wie einen Wäscher (23), und nachfolgend in eine Heizeinrichtung (25, 26) münden, von der die Reduktionsgas-Zuleitung (21) des Wirbelbettreaktors (15, 16 ) ausgeht.

2. Anlage nach Anspruch 1, dadurch gekennzeichnet, daß die Zuleitung (4) für im Einschmelzvergaser (3) gebildetes Reduktionsgas über einen Bypass (28) zur Überbrückung des Schachtofens (1) direkt mit der Topgas-Ableitung (14) des Schachtofens (1) verbunden ist.

3. Anlage nach Anspruch 1 oder 2, dadurch gekennzeichnet, daß in der Reduktionsgas-Zuleitung (21) des Wirbelbettreaktors (15, 16) eine CO₂-Entfernungsanlage (24) vorgesehen ist.

4. Anlage nach Anspruch 3, dadurch gekennzeichnet, daß die Topgas-Ableitung (14) des Schachtofens (1) unter Umgehung der CO₂-Entfernungsanlage (24) in die Reduktionsgas-Zuleitung (21) des Wirbelbettreaktors (15, 16) mündet.

5. Anlage nach einem oder mehreren der Ansprüche 1 bis 4, dadurch gekennzeichnet, daß in der Reduktionsgas-Zuleitung (21) des Wirbelbettreaktors (15, 16) eine Nachverbrennungseinrichtung (26) vorgesehen ist.

6. Anlage nach einem oder mehreren der Ansprüche 1 bis 5, dadurch gekennzeichnet, daß die Reduktionsgas-Zuleitung (21) des Wirbelbettreaktors (16) über eine Zweigleitung (29) mit der Zuleitung (4) für Reduktionsgas des Schachtofens (1) verbunden ist.

7. Anlage nach einem oder mehreren der Ansprüche 1 bis 6, dadurch gekennzeichnet, daß in den Einschmelzvergaser (3) eine Fördereinrichtung zum Einbringen des im Wirbelbettreaktor (15, 16) reduzierten, vorzugsweise anschließend brikettierten Reduktionsproduktes mündet.

8. Verfahren zur Herstellung von Roheisen und/oder Eisenschwamm mit einer Anlage nach einem oder mehreren der Ansprüche 1 bis 7, dadurch gekennzeichnet, daß Stückerz in einer Festbett-Direktreduktionszone (12) zu Eisenschwamm reduziert wird, der Eisenschwamm in einer Einschmelzvergasungszone (8) unter Zufuhr von Kohlenstoffträgern und sauerstoffhältigem Gas erschmolzen und ein CO und H₂-hältiges Reduktionsgas erzeugt wird, das in die Festbett-Direktreduktionszone (12) eingeleitet, dort umgesetzt und als Topgas abgezogen wird, und daß Feinerz in einer Wirbelbett-Direktreduktionszone (19) im Wirbelbett-Verfahren zu Eisenschwamm reduziert wird, wobei der Wirbelbett-Direktreduktionszone Topgas aus der Festbett-Direktreduktionszone (12) und/oder in der Einschmelzvergasungszone (8) erzeugtes Reduktionsgas, die eine CO₂-Entfernung und einer Aufheizung unterzogen werden, sowie in der Wirbelbett-Direktreduktionszone (19) entstehendes Abgas zugeführt und als Abgas abgezogen werden.

9. Verfahren nach Anspruch 8, dadurch gekennzeichnet. daß das Abgas aus der Wirbelbett-Direktreduktionszone (19) mit Topgas aus der Festbett-Direktreduktionszone (12) und/oder mit in der Einschmelzvergasungszone (8) erzeugtem Reduktionsgas vermischt und der Wirbelbett-Direktreduktionszone (19) zugeführt wird.

10. Verfahren nach Anspruch 8 oder 9, dadurch gekennzeichnet, daß das Abgas aus der Wirbelbett-Direktreduktionszone (19) einer CO₂-Entfernung unterworfen wird.

11. Verfahren nach einem oder mehreren der Ansprüche 8 bis 10, dadurch gekennzeichnet, daß das der Wirbelbett-Direktreduktionszone (19) zugeführte Reduktionsgas in einem Wärmetauscher (25) aufgeheizt wird.

12. Verfahren nach einem oder mehreren der Ansprüche 8 bis 11, dadurch gekennzeichnet, daß das der Wirbelbett-Direktreduktionszone (19) zugeführte Reduktionsgas einer Nachverbrennung unterworfen wird.

13. Verfahren nach einem oder mehreren der Ansprüche 8 bis 12, dadurch gekennzeichnet, daß das in der Einschmelzvergasungszone (8) gebildete Reduktionsgas unter Umgehung der CO₂-Entfernung (24) der Wirbelbett-Direktreduktionszone (19) zugeführt wird.

14. Verfahren nach einem oder mehreren der Ansprüche 8 bis 13, dadurch gekennzeichnet, daß die Direktreduktion im Wirbelbett-Verfahren (19) zwei- oder mehrstufig durchgeführt wird.

15. Verfahren nach einem oder mehreren der Ansprüche 8 bis 14, dadurch gekennzeichnet, daß ein Teil des der Wirbelbett-Direktreduktionszone (19) zugeführten Reduktionsgases abgezweigt und der Festbett-Direktreduktionszone (12) zugeführt wird.

16. Verfahren nach einem oder mehreren der Ansprüche 8 bis 15, dadurch gekennzeichnet, daß zumindest ein Teil des in der Wirbelbett-Direktreduktionszone (19) gebildeten Eisenschwammes in der Einschmelzvergasungszone (8) aufgeschmolzen wird.

17. Verfahren zum Betreiben einer Anlage nach einem oder mehreren der Ansprüche 1 bis 7, dadurch gekennzeichnet. daß die Menge an eingesetztem Stückerz in einem Bereich zwischen 0 und 100 %, vorzugsweise zwischen 30 und 60 %, des Gesamt-Erzeinsatzes variiert wird und der auf 100 % ergänzte Erzeinsatz von Feinerz gebildet ist.

## Claims

1. A plant for the production of pig iron and/or sponge iron, comprising a direct-reduction shaft furnace (1) for lumpy iron ore, a melter gasifier (3), a feed duct (4) for a reducing gas connecting the melter gasifier (3) with the shaft furnace (1), a conveying duct (13) for the reduction product formed in the shaft furnace (1) connecting the shaft furnace (1) with the melter gasifier (3), a top-gas discharge duct (14) departing from the shaft furnace (1), feed ducts (5, 6, 7) for oxygen-containing gases and carbon carriers running into the melter gasifier (3) and a tap (11) for pig iron and slag provided at the melting vessel (3), characterized by at least one fluidized bed reactor (15, 16) intended to receive fine ore, a reducing-gas feed duct (21) leading to said fluidized bed reactor (15, 16), an offgas discharge duct (22) departing from the fluidized bed reactor (15) and a discharge means (34), preferably a briquetting means (20), provided for the reduction product formed in the fluidized bed reactor (15, 16), wherein the top-gas discharge duct (14) of the shaft furnace (1) and the offgas discharge duct (22) of the fluidized bed reactor (15) run into a purification means, such as a scrubber (23), and subsequently into a heating means (25, 26) from which the reducing-gas feed duct (21) of the fluidized bed reactor (15, 16) departs.

2. A plant according to claim 1, characterized in that the feed duct (4) for reducing gas formed in the melter gasifier (3) is directly connected with the top-gas discharge duct (14) of the shaft furnace (1) via a bypass (28) for bypassing the shaft furnace (1).

3. A plant according to claim 1 or 2, characterized in that a CO₂ stripping means (24) is provided in the reducing-gas feed duct (21) of the fluidized bed reactor (15, 16).

4. A plant according to claim 3, characterized in the top-gas discharge duct (14) of the shaft furnace (1) runs into the reducing-gas feed duct (21) of the fluidized bed reactor (15, 16) while avoiding the CO₂ stripping means (24).

5. A plant according to one or several of claims 1 to 4, characterized in that an afterburning means (26) is provided in the reducing-gas feed duct (21) of the fluidized bed reactor (15, 16).

6. A plant according to one or several of claims 1 to 5, characterized in that the reducing-gas feed duct (21) of the fluidized bed reactor (16) is connected with the reducing-gas feed duct (4) of the shaft furnace (1) via a branch duct (29).

7. A plant according to one or several of claims 1 to 6, characterized in that a conveying means for introducing the reduction product reduced in the fluidized bed reactor (15, 16) and preferably briquetted afterwards runs into the melter gasifier (3).

8. A process for the production of pig iron and/or sponge iron comprising a plant according to one or several of claims 1 to 7, characterized in that lumpy ore is reduced to sponge iron in a fixed-bed direct reduction zone (12) , the sponge iron is melted in a meltdown gasifying zone (8) under supply of carbon carriers and oxygen-containing gas and a CO and H₂-containing reducing gas is produced, which is introduced into the fixed-bed direct reduction zone (12), is reacted there and is drawn off as a top gas, and that fine ore is reduced to sponge iron in a fluidized-bed direct reduction zone (19) according to the fluidized bed method, wherein top gas from the fixed-bed direct reduction zone (12) and/or reducing gas produced in the meltdown gasifying zone (8), which are subjected to CO₂ stripping and heating, as well as offgas forming in the fluidized-bed direct reduction zone (19) are fed to the fluidized-bed direct reduction zone and drawn off as an offgas.

9. A process according to claim 8, characterized in that the offgas from the fluidized-bed direct reduction zone (19) is mixed with top gas from the fixed-bed direct reduction zone (12) and/or with reducing gas produced in the meltdown gasifying zone (8) and is fed to the fluidized-bed direct reduction zone (19).

10. A process according to claim 8 or 9, characterized in that the offgas from the fluidized-bed direct reduction zone (19) is subjected to CO₂ stripping.

11. A process according to one or several of claims 8 to 10, characterized in that the reducing gas fed to the fluidized-bed direct reduction zone (19) is heated in a heat exchanger (25).

12. A process according to one or several of claims 8 to 11, characterized in that the reducing gas fed to the fluidized-bed direct reduction zone (19) is subjected to afterburning.

13. A process according to one or several of claims 8 to 12, characterized in that the reducing gas formed in the meltdown gasifying zone (8) is fed to the fluidized-bed direct reduction zone (19) while avoiding CO₂ stripping (24).

14. A process according to one or several of claims 8 to 13, characterized in that direct reduction is carried out in the fluidized bed process (19) in two or several steps.

15. A process according to one or several of claims 8 to 14, characterized in that a portion of the reducing gas fed to the fluidized-bed direct reduction zone (19) is branched off and fed to the fixed-bed direct reduction zone (12).

16. A process according to one or several of claims 8 to 15, characterized in at least a portion of the sponge iron formed in the fluidized-bed direct reduction zone (19) is melted in the meltdown gasifying zone (8).

17. A process for operating a plant according to one or several of claims 1 to 7,
characterized in that the charging amount of lumpy ore is varied within a range of between 0 and 100 %, preferably between 30 and 60 %, of the overall ore input and the balance charge to 100 % is comprised of fine ore.

## Revendications

1. Installation de production de fonte brute et/ou d'éponge de fer, comportant un four à cuve de réduction directe (1) pour du minerai de fer en morceaux, un gazéificateur pendant fusion (3), une conduite d'arrivée (4), reliant un gazéificateur pendant fusion (3) avec le four à cuve (1), pour un gaz de réduction, une conduite de transport (13), reliant le four à cuve (1) avec le gazéificateur pendant fusion (3), pour le produit de réduction formé dans le four à cuve (1), comportant une conduite (14) de départ du gaz de gueulard sortant du four à cuve (1), comportant des conduites d'arrivée (5, 6, 7), débouchant dans le gazéificateur pendant fusion (3), pour des gaz à teneur d'oxygène et des composés du carbone, ainsi qu'une rigole (11), prévue sur le récipient de fusion (3), pour la fonte brute et pour le laitier, caractérisée par au moins un réacteur à lit fluidisé (15, 16) pour recevoir des fines de minerai, une conduite d'arrivée du gaz de réduction (21) à ce réacteur à lit fluidisé (15, 16), une conduite de départ (22) pour le gaz perdu sortant du réacteur à lit fluidisé (15) et un dispositif de sortie (34), de préférence une installation d'agglomération (20), pour le produit de réaction formé dans le réacteur à lit fluidisé (15, 16), la conduite (14) de départ du gaz de gueulard du four à cuve (1) et la conduite (22) de départ du gaz perdu sortant du réacteur à lit fluidisé (15) débouchant dans un dispositif d'épuration comme un appareil laveur (23), et ensuite dans un dispositif de chauffage (25, 26), d'où sort la conduite (21) d'arrivée du gaz de réduction du réacteur à lit fluidisé (15, 16).

2. Installation selon la revendication 1, caractérisée par le fait que la conduite d'arrivée (4) pour du gaz de réduction formé dans le gazéificateur pendant fusion (3) est directement reliée à la conduite (14) de départ du gaz de gueulard du four à cuve (1), par l'intermédiaire d'un by-pass (28), pour bypasser le four à cuve (1).

3. Installation selon la revendication 1 ou 2, caractérisée par le fait que dans la conduite (21) d'arrivée du gaz de réduction du réacteur à lit fluidisé (15, 16) est prévue une installation d'élimination du CO₂ (24).

4. Installation selon la revendication 3, caractérisée par le fait que la conduite (14) de départ du gaz du gueulard du four à cuve (1) débouche dans la conduite (21) d'arrivée du gaz de réduction du réacteur à lit fluidisé (15, 16) en bypassant l'installation d'élimination du CO₂ (24).

5. Installation selon une ou plusieurs des revendications 1 à 4, caractérisée par le fait que dans la conduite (21) d'arrivée du gaz de réduction du réacteur à lit fluidisé (15, 16) est prévu un dispositif de postcombustion (26).

6. Installation selon une ou plusieurs des revendications 1 à 5, caractérisée par le fait que la conduite (21) d'arrivée du gaz de réduction du réacteur à lit fluidisé (16) est reliée, par l'intermédiaire d'une conduite de dérivation (29), avec la conduite (4) d'arrivée du gaz de réduction du four à cuve (1).

7. Installation selon une ou plusieurs des revendications 1 à 6, caractérisée par le fait que dans le gazéificateur pendant fusion (3) débouche un dispositif de transport pour amener le produit de la réaction, réduit dans le réacteur à lit fluidisé (15, 16), de préférence ensuite aggloméré.

8. Procédé de production de fonte brute et/ou d'éponge de fer avec une installation conforme à une ou plusieurs des revendications 1 à 7, caractérisé par le fait que, dans une zone de réduction directe à lit fixe (12), on réduit le minerai de fer en éponge de fer, on fait fondre l'éponge de fer dans une zone de gazéification pendant fusion (8) en amenant des composés du carbone et un gaz à teneur d'oxygène et on produit un gaz de réduction contenant CO et H₂ que l'on introduit dans la zone de réduction directe à lit fixe (12), qui y réagit et en sort sous forme de gaz de gueulard, et que, dans une zone de réduction directe à lit fluidisé (19), on réduit, par le procédé à lit fluidisé. des fines de minerai en éponge de fer, procédé dans lequel, dans la zone de réduction directe à lit fluidisé, on envoie du gaz de gueulard provenant de la zone de réduction directe à lit fixe (12) et/ou du gaz de réduction produit dans la zone de gazéification pendant fusion (8), gaz qui ont été soumis à une élimination du CO2 et à un réchauffage, ainsi que du gaz perdu qui apparaît dans la zone de réduction directe à lit fluidisé (19) et en sort sous forme de gaz perdu.

9. Procédé selon la revendication 8, caractérisé par le fait que l'on mélange le gaz perdu provenant de la zone de réduction directe à lit fluidisé (19) avec du gaz de gueulard provenant de la zone de réduction directe à lit fixe (12) et/ou avec du gaz de réduction produit dans la zone de gazéification pendant fusion (8) et qu'on l'amène à la zone de réduction directe à lit fluidisé (19).

10. Procédé selon la revendication 8 ou 9, caractérisé par le fait que l'on soumet à une élimination du CO₂ le gaz perdu provenant de la zone de réduction directe à lit fluidisé (19).

11. Procédé selon l'une ou plusieurs des revendications 8 à 10, caractérisé par le fait que l'on chauffe dans un échangeur de chaleur (25) le gaz de réduction amené à la zone de réduction directe à lit fluidisé (19).

12. Procédé selon l'une ou plusieurs des revendications 8 à 11, caractérisé par le fait que l'on soumet à une postcombustion le gaz de réduction amené à la zone de réduction directe à lit fluidisé (19).

13. Procédé selon l'une ou plusieurs des revendications 8 à 12, caractérisé par le fait que l'on amène le gaz de réduction, formé dans la zone de gazéification pendant fusion (8), à la zone de réduction directe à lit fluidisé (19) en bypassant l'élimination du CO₂ (24).

14. Procédé selon l'une ou plusieurs des revendications 8 à 13, caractérisé par le fait que l'on procède à la réduction directe par le procédé à lit fluidisé (19) en deux, ou davantage, étages.

15. Procédé selon l'une ou plusieurs des revendications 8 à 14, caractérisé par le fait que l'on dérive une partie du gaz de réduction amené à la zone de réduction directe à lit fluidisé (19) et qu'on l'amène à la zone de réduction directe à lit fixe (12).

16. Procédé selon l'une ou plusieurs des revendications 8 à 15, caractérisé par le fait que l'on fait fondre dans la zone de gazéification pendant fusion (8) au moins une partie de l'éponge de fer formée dans la zone de réduction directe à lit fluidisé (19).

17. Procédé d'exploitation d'une installation selon l'une ou plusieurs des revendications 1 à 7, caractérisé par le fait que l'on fait varier la quantité de minerai en morceaux chargé sur une plage allant entre 0 et 100%, de préférence entre 30 et 60% de la charge de minerai totale et que le complément à 100% est formé de fines de minerai.
